# EUROPEAN PATENT APPLICATION

(11) **EP 3 696 717 A1**
(43) Date of publication of application: **19.08.2020**
(21) Application number: 19157742.8
(22) Date of filing: 18.02.2019
(51) Int. Cl.: G06K 9/00, G06K 9/46, G06K 9/62

(54) **IMPROVING THE RECOGNITION CAPABILITY OF A RECOGNITION NETWORK**

(71) Applicant: Siemens Aktiengesellschaft, 80333 München (DE)
(72) Inventor: Zakharov, Sergey, 85614 Kirchseeon (DE); Ilic, Slobodan, 81547 München (DE); Hutter, Andreas, 81673 München (DE)

(57) **Abstract**

The invention discloses an automated method for improving the recognition capability of a recognition network (3) for a target object (6), providing:
- input image data (1a) containing an image of the target object (6),
- a recognition network (3) alterable by modifiable recognition network parameters, whereas the recognition network (3) is designed to recognize the target object (6) in image data by means of an object classifier (5), and
- a deception network (4) alterable by modifiable deception network parameters, whereas the deception network is designed to generate deceived image data (1b) of the input image data (1a) by modifying the deception network parameters and whereas the deceived image data (1b) are forwarded to the recognition network (3),
characterized by the following steps:
a) generating (S1) the deceived image data (1b) by modifying the deception network parameters such as the uncertainty of the object classifier (5) determined by the recognition network (3) is increased,
b) using (S2) the deceived image data (1b) of step a) concatenated with the input image data (1a) as input for the recognition network (3), whereas the recognition network parameters are modified such as the uncertainty of the object classifier (5) is reduced, and
c) repeating steps a) and b).

A use of the method, a computational device, a computer software product and a computer-readable medium are disclosed as well.

## Description

### Field of the Invention

The present invention relates to an automated method for improving the recognition capability of a recognition network for a target object, a computational device, a computer program, a computer-readable storage medium and a use of the method for improving the capability of a recognition system.

### Background of the Invention

Training on synthetic data is the holy grail of computer vision, but the domain gap between synthetic renderings and the real world is big. If one could find a mapping from one domain to another, it would allow for vast advances of computer vision applications in industry. The reason for this is that often there is no access to real physical objects to acquire training data required for deep-learning methods, meaning annotated sequences of images with real objects.

Nevertheless, what often is available are 3D CAD models of the objects of interest (= target object). They can be taken easily and big amounts of required data can be rendered. The problem, however, is that these rendered images, despite the apparent visual similarity, are going to look different from the real ones coming from a sensor. This means that the deep-learning method trained on perfect renderings is going to perform poorly on real data.

Possible sources of such discrepancy are manifold:
- general difference between a 3D model and an actual object,
- image formation; synthetic: clean edges, unrealistic shading, aliasing issues; real: sensor noise, Bayer mosaicing & compression artifacts,
- variety of real images (textures, colours) lead to more generic filters. Training on synthetic leads to a poor filter variety.

Various domain adaptation works put their efforts to bridge the gap between the domains. One possible solution is to use a small unlabelled subset of real data to improve the realism of the synthetic data. For example, in "K. Bousmalis, N. Silberman, D. Dohan, D. Erhan, and D. Krishnan, Unsupervised pixel-level domain adaptation with generative adversarial networks, IEEE Conference on Computer Vision and Pattern Recognition (CVPR), 2017" it is proposed to use deep-learning to learn the mapping from synthetic images to real. It works quite well for a chosen domain of interest, but to train such a net one needs real data.

As an alternative, one could try to learn domain-invariant features that work well for both real and synthetic domains. One of the recent examples is the method described in "M. Rad, M. Oberweger, and V. Lepetit, Feature Mapping for Learning Fast and Accurate 3D Pose Inference from Synthetic Images, arXiv:1712.03904 [cs], 2017".

But what if one does not have real data available? In this case, the answer is domain randomization. Domain randomization is a popular approach, which goal is to randomize the parts of the domain that we do not want our algorithm to be sensitive to. For example, in the case of object classification, one could randomize the background of the object since it should not play a role in recognizing the object itself.

In addition, one could also randomize the texture of the object if no data on its appearance is available. This sort of parametrization allows to learn features that are invariant to properties of the domain. Nevertheless, the main question remains unsolved: What is the main cause of confusion given the domain change? Domain randomization tries to target all possible scenarios, but we do not really know which of them are useful to bridge the domain gap. Moreover, it is almost impossible to cover all the possible variations present in the real world by applying simple augmentations.

### Summary of the Invention

The objective of the present invention is to provide a solution for improving the recognition capability of a recognition network.

To accomplish the objective, the present invention provides a solution according to the independent claims. Advantageous embodiments are provided in the dependent claims.

According to a first aspect of the invention, instead of the commonly used domain randomization technique, i.e. augmenting the image by manually adding random backgrounds and lightness parameters, a recognition network itself is used to produce augmentations that maximize the uncertainty of the output. By solving a minimax optimization problem much more robust mappings are achieved that scale well to different domains without any target data available.

The invention claims an automated method for improving the recognition capability of a recognition network for a target object, providing:
- input image data containing an image of the target object,
- a recognition network alterable by modifiable recognition network parameters, whereas the recognition network is designed to recognize the target object in image data by means of an object classifier, and
- a deception network alterable by modifiable deception network parameters, whereas the deception network is designed to generate deceived image data of the input image data by modifying the deception network parameters and whereas the deceived image data are forwarded to the recognition network,
characterized by the following steps:
a) generating the deceived image data by modifying the deception network parameters such as the uncertainty of the object classifier determined by the recognition network is increased,
b) using the deceived image data of step a) concatenated with the input image data as input for the recognition network, whereas the recognition network parameters are modified such as the uncertainty of the object classifier is reduced, and
c) repeating steps a) and b).

The feature "recognition network parameter" is broadly used and can be any modifiable part of the recognition network. For example, recognition parameters can be "weights" adjustable during learning in an artificial neural network.

The advantage of the invention is that instead of augmenting the input with random augmentations, the method of interest is used directly to learn the augmentation that maximizes the error of the method. As a result, the achieved mapping is highly invariant to the changes in the input data and generalizes well to real data without having a single glimpse on it.

The method allows for a consistent domain generalization improvement for deep learning-based recognition algorithms, while requiring no target domain data. A clever, network specific pipeline allows to explicitly supervise the algorithm of interest to learn domain invariant features by defining learning constrains.

Methods that generalize well to different target domains are desired in industry since it is often impossible to acquire real data sequences of each new model and each new environment for training.

In a further embodiment the steps a) and b) are repeated until a reduction of the uncertainty of the object classifier is below a predefined threshold. Such the repetition of the steps comes to a defined end.

In a further embodiment the object classifier is a predefined class or predefined pose of the target object. Class for example can be a specific working tool, pose can be a specific direction of the target object.

In a further embodiment the background or the texture of the target object are variated in step a) to modify the deception parameters.

In a further embodiment the deception network and/or the recognition network comprises an artificial neural network, for example a convolutional neural network.

An artificial neuron network is a computational model based on the structure and functions of biological neural networks. Information that flows through the network affects the structure of the artificial neuron network because a neural network changes - or learns, in a sense - based on that input and output.

Artificial neuron networks are considered nonlinear statistical data modelling tools where the complex relationships between inputs and outputs are modelled or patterns are found. Artificial neuron network is also known as a neural network.

In a further embodiment the input image data are based on CAD data. No real image data are necessary for the invention.

According to a second aspect of the invention a target object should be recognized by the trained recognition network.

The invention claims using the recognition algorithm improved by a method according to the invention to recognize a target object in image data generated by an image sensor.

In a further embodiment the image sensor is a camera or a laser system.

In a third aspect of the invention a device performing the invention should be claimed.

The invention claims a computational device designed to perform a method according to the invention.

In a fourth aspect of the invention a computer program and a computer-readable medium should be claimed.

The invention claims a computer program product comprising instructions which, when the program is executed by a computational device, cause the computational device to carry out the steps of the method according to the invention.

The invention further claims a computer-readable storage medium comprising instructions which, when executed by a computational device, cause the computational device to carry out the steps of the method according to the invention.

Further benefits and advantages of the present invention will become apparent after a careful reading of the detailed description with appropriate reference to the accompanying drawings.

### Brief Description of the Drawings

- Fig. 1: shows a block diagram of the computational device,
- fig. 2: shows a flow chart of the method and
- fig. 3: shows a block diagram of a recognition system.

### Detailed Description of the Invention

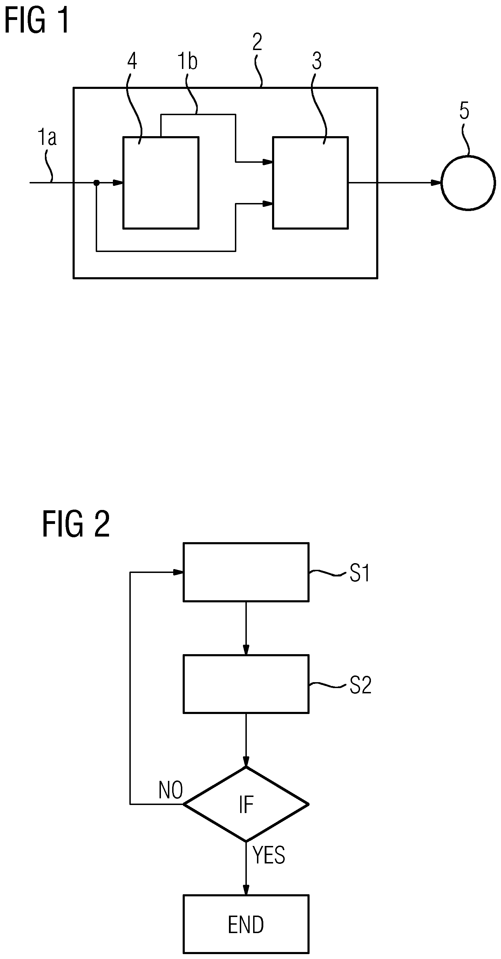

As an example of the invention, **fig. 1** shows a block diagram of the computational device 2. The device consists of the following two components: a recognition network 3 designed for a specific task, e.g. classification, pose estimation, detection, etc., and a deception network 4 designed to modify input image data to maximize the uncertainty of the recognition network. The deception network comprises an encoder and a decoder.

The two networks 3 and 4 are trained competitively in a min/max game fashion as shown in the flow chart of **fig. 2****.** A single training iteration consists of two steps:
First step S1: A forward pass through the deception network 4 that outputs a batch of images of the same size as the input (= deceived image data 1b). The deceived image data 1b of the deception network 4 is then fed to the recognition network 3 to maximize the uncertainty of its output (= object classifier 5). Backpropagation is then applied to update the deception network's 4 parameters only. To reverse the loss function of the recognition network 3 to maximize the uncertainty of it a gradient reversal layer is used, following the work of "Ganin, Yaroslav, and Victor Lempitsky, Unsupervised Domain Adaptation by Backpropagation, International Conference on Machine Learning, pp. 1180-1189', 2015.

To achieve desired output transformations (= deceived image data 1b), constrains of the deception network 4 are defined. The constrains are task specific: in the case of having textured objects, any pixel changes on the object surface are penalized (= not allowed) and background changes are allowed; when no texture is available, gradient changes of the object on the output are penalized.

### RGB:

1. Background augmentation
2. Object lighting augmentation based on the Phong lighting model
   a. Additional lighting decoder is used to output the light source direction and the light colour
   b. Given the normal map of the object and the output of the lighting decoder, i.e. 3D light vector and 3D light colour, we generate:
      i. Diffusion light: simulates the directional impact a light source has on the object
      ii. Specular light: simulates the bright light spot that appears on shiny objects

### Depth:

### 1. Background depth augmentation

Second step S2: A forward pass through the recognition network 3 providing the output of the deception network 4 as input. The unmodified input (= image data 1a) is kept and concatenated with the transformed one for stability reasons. The objective here is to minimize the recognition network's 3 loss (= uncertainty of the object classifier 5) given the modified input. In this case, the network parameters are updated only for the recognition network 3.

Constant repletion of described steps S1 and S2 results in a minmax game where the deception network 4 tries to degrade the recognition network's 3 performance by modifying its input in a way that should be irrelevant for a given task. On the other hand, the recognition network 3 learns features that are invariant to transformations introduced by the deception network 3, making it increasingly more generalizable and robust. Advantageously, the repletion ends when a predefined threshold of the uncertainty of the object classifier is reached.

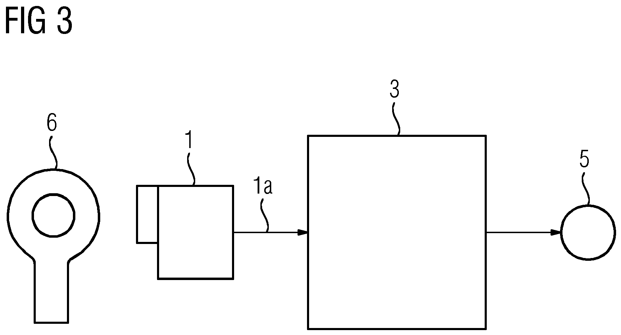

**Fig. 3** shows a block diagram of a recognition system with a computational device 2 comprising the recognition network 3 which has been trained by the aforementioned method. An image of the target object 6 is captured by an image sensor 1 and fed into the trained recognition network 3. The object classifier 5 of the target object 5 is outputted by the recognition network 3. The object classifier 5 is for example a class and/or a pose of the target object 5. The recognition network 3 is for example a convolutional neural network.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1: image sensor
- 1a: image data
- 1b: deceived image data
- 2: computational device
- 3: recognition network
- 4: deception network
- 5: object classifier
- 6: target object

## Claims

1. Automated method for improving the recognition capability of a recognition network (3) for a target object (6), providing:
- input image data (1a) containing an image of the target object (6),
- a recognition network (3) alterable by modifiable recognition network parameters, whereas the recognition network (3) is designed to recognize the target object (6) in image data by means of an object classifier (5), and
- a deception network (4) alterable by modifiable deception network parameters, whereas the deception network is designed to generate deceived image data (1b) of the input image data (1a) by modifying the deception network parameters and whereas the deceived image data (1b) are forwarded to the recognition network (3),
**characterized by** the following steps:
a) generating (S1) the deceived image data (1b) by modifying the deception network parameters such as the uncertainty of the object classifier (5) determined by the recognition network (3) is increased,
b) using (S2) the deceived image data (1b) of step a) concatenated with the input image data (1a) as input for the recognition network (3), whereas the recognition network parameters are modified such as the uncertainty of the object classifier (5) is reduced, and
c) repeating steps a) and b).

2. Method according to claim 1, **characterized by** repeating steps a) (S1) and b) (S2) until a reduction of the uncertainty of the object classifier (5) is below a predefined threshold.

3. Method according to claim 1 or 2,
whereas the object classifier (5) is a predefined class or predefined pose of the target object (6).

4. Method according to one of the previous claims,
whereas the background or the texture of the target object (6) are variated in step a) (S1) to modify the deception parameters.

5. Method according to one of the previous claims,
whereas the deception network (4) and/or the recognition network (3) comprises an artificial neural network.

6. Method according to one of the previous claims,
whereas the input image data (1a) are based on CAD data.

7. Using the recognition algorithm of the recognition network (3) improved by a method according to one of the previous claims to recognize a target object (6) in image data (1a) generated by an image sensor (1).

8. Using the recognition algorithm according to claim 7, whereas the image sensor is a camera or a laser system.

9. Computational device (2) designed to perform a method according to one of the claims 1 to 6.

10. A computer program product comprising instructions which, when the program is executed by a computational device (2), cause the computational device (2) to carry out the steps of the method according to one of the claims 1 to 6.

11. A computer-readable storage medium comprising instructions which, when executed by a computational device (2), cause the computational device (2) to carry out the steps of the method of claim according to one of the claims 1 to 6.
